# EUROPEAN PATENT SPECIFICATION

(11) **EP 4 064 525 B1**
(45) Date of publication and mention of the grant of the patent: **13.03.2024**
(21) Application number: 20941289.9
(22) Date of filing: 17.12.2020
(51) Int. Cl.: H02K 1/276, H02K 1/28

(54) **ROTOR ASSEMBLY AND MOTOR HAVING SAME**
ROTORANORDNUNG UND MOTOR DAMIT
ENSEMBLE ROTOR ET MOTEUR COMPORTANT CELUI-CI

(30) Priority: 16.06.2020 CN 202010550859; 16.06.2020 CN 202010550022
(43) Date of publication of application: 28.09.2022
(73) Proprietor: Guangdong Welling Motor Manufacturing Co., Ltd., Foshan, Guangdong 528311 (CN)
(72) Inventor: ZUO, Yajun, Foshan, Guangdong 528311 (CN); LI, Wenrui, Foshan, Guangdong 528311 (CN); WANG, Hongxiao, Foshan, Guangdong 528311 (CN); LI, Hu, Foshan, Guangdong 528311 (CN)
(74) Representative: Whitlock, Holly Elizabeth Ann
(86) International application number: PCT/CN2020/137397
(87) International publication number: WO 2021/253767

(56) References cited:
- CN-A- 107 257 176
- CN-A- 109 980 821
- CN-A- 111 769 664
- CN-A- 111 769 665
- CN-A- 111 769 666
- CN-A- 111 884 369
- CN-A- 111 884 370
- CN-U- 204 481 589
- CN-U- 206 628 908
- CN-U- 208 112 348
- CN-U- 209 692 451
- CN-U- 209 692 451
- US-A1- 2012 181 895
- US-A1- 2019 123 629

## Description

### FIELD

Embodiments of the present disclosure relates to the field of motor technology, and in particular, to a rotor assembly and a motor having the rotor assembly.

### BACKGROUND

As a power density of a motor increases, an energy density of the motor increases, and a magnetic field of the motor tends to be deeply saturated, resulting in an increased electromagnetic noise. In related arts, in order to reduce an electromagnetic vibration and noise caused by a torque fluctuation during an operation of the motor, a vibration damping material is filled between a rotor core and a rotation shaft or shaft sleeve to absorb an electromagnetic force wave, thereby reducing the noise of the motor and realizing a vibration damping. However, by filling the vibration damping material between the rotor core and the rotation shaft or the shaft sleeve, the motor has poor noise reduction and the vibration damping, which needs to be improved.
CN109980821A relates generally to a rotor assembly and a motor.

### SUMMARY

The present disclosure is made based on the inventor's discovery and understanding of the following facts and problems.

In related arts, a vibration damping rotor assembly includes a permanent magnet, an outer iron core, a rotation shaft, an injection molding body and a vibration damping ring. The injection molding body includes an upper end plate, a lower end plate, and a plastic seal connection portion by which the upper end plate and the lower end plate are connected to each other. A first annular boss axially protrudes from the upper end plate and/or the lower end plate. An inner iron core is installed on the rotation shaft and embedded within a groove of the first annular boss. The vibration damping ring is disposed between the inner iron core and an inner wall of the groove. On the one hand, due to a limited gap between the inner iron core and the inner wall of the groove, an amount of a material of a vibration damping member is limited, which results in poor noise reduction and the vibration damping. On the other hand, an injection molding member is made of a different material from the vibration damping ring. There is no connection for the vibration damping ring at an end of the outer iron core. A gap is likely to be formed between boundary surfaces of the injection molding member and the vibration damping ring. Reliability problems may occur due to different coefficients such as a heat expansion coefficient during an operation. Further, the injection molding member has a small damping, and thus the noise suppression effect of the electromagnetic vibration noise is not significant. On the other hand, two steps of injection molding and placing the vibration damping ring should be performed on the vibration damping rotor assembly during its production. Therefore, the process is complicated and the defective rate is high in mass production.

The present disclosure aims to solve one of the technical problems in the related arts at least to a certain extent.

Aspects of the invention are set out in the claims. In the following, each of the described methods, apparatuses, embodiments, examples, and aspects, which do not fully correspond to the invention as defined in the claims is thus not according to the invention and is, as well as the whole following description, present for illustration purposes only or to highlight specific aspects or features of the claims. Embodiments not falling under the scope of the claims should be interpreted as examples useful for understanding the invention. To this end, embodiments of the present disclosure provide a rotor assembly that can increase an amount of a material of a vibration damping member and has a good effect of noise reduction and vibration damping and a high reliability.

Embodiments of the present disclosure also provide a motor.

The rotor assembly according to embodiments of the present disclosure includes: a rotor core having at least one magnetic groove and a rotation shaft hole; a permanent magnet disposed in the at least one magnetic groove; a rotation shaft disposed in the rotation shaft hole, a gap being defined between the rotation shaft and the rotor core, and the rotation shaft having a first end and a second end that extend out of the rotation shaft hole; a first end vibration damping member disposed on a first end surface of the rotor core and connected to the rotor core; a first transmission member disposed within the first end vibration damping member, the first transmission member interacting with the rotation shaft, and the rotor core being capable of driving the rotation shaft at least sequentially by the first end vibration damping member and the first transmission member.

In the rotor assembly according to the embodiments of the present disclosure, by arranging the first end vibration damping member, which interacts with the rotation shaft by the first transmission member, on the first end surface of the rotor core, it is possible to avoid a rigid connection between the rotation shaft and the rotor core. Further, the first transmission member can improve a rotation effect of the rotation shaft. In addition, there is a large amount of a material of the vibration damping member, and thus noise reduction and vibration damping are good. There are no different thermal expansion coefficients, thereby improving a reliability of the rotor assembly. Furthermore, only the vibration damping member is provided during the production process. Therefore, the preparation process is simple, and a defective rate is reduced in mass production.

In some embodiments, a part of the first end vibration damping member directly interacts with the rotation shaft. The rotor core is also capable of driving the rotation shaft by the part of the first end vibration damping member and sequentially by the first end vibration damping member and the first transmission member.

In some embodiments, the part of the first end vibration damping member has a thickness L in an axial direction of the rotation shaft, where L≥0.5 mm.

In some embodiments, the first transmission member includes a first body and a first boss protruding from the first body towards the first end surface of the rotor core. The rotation shaft passes through the first body and the first boss. A minimum distance L1 between the first boss and the first end surface of the rotor core in the axial direction of the rotor core is L1 greater than 0.5 mm.

In some embodiments, a minimum gap between the first boss and the permanent magnet in a radial direction of the rotor core is L2 greater than 0.5 mm. A minimum gap between the first body and the permanent magnet in the axial direction of the rotor core is L3 greater than 0.5 mm.

In some embodiments, the rotor assembly also includes a second end vibration damping member disposed on a second end surface of the rotor core and connected to the rotor core. The second end vibration damping member directly interacts with the rotation shaft. The rotor core is also capable of driving the rotation shaft by the second end vibration damping member and sequentially by the first end vibration damping member and the first transmission member.

In some embodiments, each of the first end vibration damping member and the second end vibration damping member is made of a viscoelastic material.

In some embodiments, the viscoelastic material has a loss factor greater than or equal to 0.15 and a Shore hardness ranging from 20 degrees to 80 degrees.

In some embodiments, the rotor assembly also includes an outer connection vibration damping member. The rotor core has an axial through hole located between adjacent magnetic grooves. The outer connection vibration damping member is disposed within the axial through hole. The outer connection vibration damping member has a first end connected to the first end vibration damping member and a second end connected to the second end vibration damping member.

In some embodiments, the rotor assembly also includes a second end vibration damping member disposed on the second end surface of the rotor core and connected to the rotor core, and a second transmission member disposed in the second end vibration damping member. The second transmission member interacts with the rotation shaft. The rotor core is also capable of driving the rotation shaft sequentially by the second end vibration damping member and the second transmission member.

In some embodiments, a part of the first end vibration damping member directly interacts with the rotation shaft, and a part of the second end vibration damping member directly interacts with the rotation shaft.

In some embodiments, each of the first end vibration damping member and the second end vibration damping member has an opening defined thereon. A part of the rotor core is exposed through the opening.

In some embodiments, the rotor assembly also includes an outer connection vibration damping member. The rotor core has an axial through holes located between adjacent magnetic grooves. The outer connection vibration damping member is disposed within the axial through hole. The outer connection vibration damping member has a first end connected to the first end vibration damping member and has a second end connected to the second end vibration damping member.

In some embodiments, the rotor assembly also includes an inner connection vibration damping member disposed in the gap between the rotation shaft and the rotor core. The inner connection vibration damping member has a first end connected to the first end vibration damping member and a second end connected to the second end vibration damping member.

In some embodiments, the rotor assembly also includes a middle connection vibration damping member. An interspace is defined between an inner surface of the permanent magnet and an inner bottom surface of the at least one magnetic groove. The middle connection vibration damping member has a first end connected to the first end vibration damping member and a second end connected to the second end vibration damping member.

In some embodiments, the rotor core is formed by laminating a plurality of rotor laminations in the axial direction of the rotor core. The plurality of rotor laminations includes at least one full-bridging lamination and at least one half-bridging lamination. The rotor core has a first end portion, a second end portion, and a middle section located between the first end portion and the second end portion. Each of the first end portion and the second portion is formed by laminating a plurality of the full-bridging laminations. The middle section is formed by laminating a plurality of half-bridging laminations.

In some embodiments, one of adjacent half-bridging laminations of the intermediate section in the axial direction of the rotor core is capable of rotating at least one magnetic pole relative to the other of the adjacent half-bridging laminations in a circumferential direction of the rotor core.

In some embodiments, some of a plurality of inner magnetic bridges of the at least one half-bridging lamination have magnetic bridge holes defined thereon. The magnetic bridge holes pass through the inner magnetic bridges in the circumferential direction of the rotor core. Inner magnetic bridges of one of adjacent half-bridging laminations in the axial direction of the rotor core have magnetic bridge holes, and inner magnetic bridges of the other of the adjacent half-bridging laminations have no magnetic bridge hole. A circumferential connection vibration damping member is disposed within the magnetic bridge hole. Adjacent middle connection vibration damping members are connected to each other by the circumferential connection vibration damping member.

In some embodiments, each of the first end vibration damping member, the second end vibration damping member, the inner connection vibration damping member, the outer connection vibration damping member, the middle connection vibration damping member, and the circumferential connection vibration damping member is made of a viscoelastic material.

In some embodiments, the first end vibration damping member, the second end vibration damping member, the inner connection vibration damping members, the outer connection vibration damping member, the middle connection vibration damping member, and the circumferential connection vibration damping member are integrally formed through injection molding.

In some embodiments, the viscoelastic material has a loss factor greater than or equal to 0.15 and a Shore hardness ranging from 20 degrees to 80 degrees.

In some embodiments, a length of the permanent magnet in the axial direction of the rotor core is greater than an axial length of the at least one magnetic groove. The permanent magnet has a first end extending out of the magnet groove and engaged into the first end vibration damping member and a second end extending out of the magnet groove and engaged into the second end vibration damping member.

In some embodiments, an outer peripheral wall of the first transmission member has at least one first transmission radial protrusion and at least one first transmission radial open groove located between adjacent first transmission radial protrusions. The first end vibration damping member has a first central hole. A peripheral wall of the first central hole has at least one first vibration damping radial protrusion and at least one first vibration damping radial open groove located between adjacent first vibration damping radial protrusions. The at least one first transmission radial protrusion is engaged into the at least one first vibration damping radial open groove, and the at least one first vibration damping radial protrusion is engaged into the at least one first transmission radial open groove.

A motor according to embodiments of the present disclosure includes the rotor assembly as described in any of the above embodiments.

In the motor according to the embodiments of the present disclosure, in the rotor assembly, the first end vibration damping member, which interacts with the rotation shaft by the first transmission member, is disposed on the first end surface of the rotor core. Thus, it is possible to avoid the rigid connection between the rotation shaft and the rotor core. In addition, the first transmission member can improve the rotation effect of the rotation shaft. Further, the amount of the material of the vibration damping member is great, and thus the noise reduction and vibration damping effects are good and the reliability is high.

### BRIEF DESCRIPTION OF DRAWINGS

FIG. 1 is an exploded perspective view of a rotor assembly according to an embodiment of the present disclosure.
FIG. 2 is a schematic sectional view of the rotor assembly shown in FIG. 1 in an assembly state.
FIG. 3 is another schematic view of the rotor assembly shown in FIG. 1 in the assembly state.
FIG. 4 is an axial partial sectional view of the rotor assembly shown in FIG. 1.
FIG. 5 is an enlarged schematic view at part A in FIG. 4.
FIG. 6 is a cross-sectional view of a vibration damping rotor shown in FIG. 3.
FIG. 7 is a schematic view of a rotor core of a rotor assembly according to an embodiment of the present disclosure.
FIG. 8 is a schematic perspective view of a transmission member of a rotor assembly according to an embodiment of the present disclosure.
FIG. 9 is a plane view of a transmission member of a rotor assembly according to an embodiment of the present disclosure.
FIG. 10 is a schematic view of a half-bridging lamination of a rotor assembly according to an embodiment of the present disclosure.
FIG. 11 is a schematic view of a full-bridging lamination of a rotor assembly according to an embodiment of the present disclosure.
FIG. 12 is a cross-sectional view of the rotor assembly shown in FIG. 1.
FIG. 13 is a side view of the rotor assembly shown in FIG. 1.
FIG. 14 is another schematic perspective view of a transmission member of a rotor assembly according to an embodiment of the present disclosure.
FIG. 15 is a comparison diagram of a damping ratio of the rotor assembly according to an embodiment of the present disclosure with that in the related art.

Reference Signs:
rotor assembly 100, rotor core 10, rotation shaft hole 101, magnet groove 102, axial through hole 103, magnetic bridge hole 104, interspace 105, full-bridging lamination 110, half-bridging lamination 120, lamination body 111, outer magnetic bridge 112, inner magnetic bridge 113, magnetic pole 114, bump 115, permanent magnet 20, vibration damping member 60, first end vibration damping member 61, plate portion 610, boss portion 611, opening 612, first vibration damping radial inner open groove 615, first vibration damping radial inner protrusion 616, first central hole 617, second end vibration damping member 62, outer connection vibration damping member 63, middle connection vibration damping member 64, inner connection vibration damping member 65, circumferential connection vibration damping member 66, first transmission member 51, first transmission radial protrusion 510, first transmission radial open groove 511, first body 513, first boss 514, second transmission member 52, second transmission radial protrusion 520, second transmission radial open groove 521, second body 523, second boss 524.

### DESCRIPTION OF EMBODIMENTS

Embodiments of the present disclosure are described in detail below, the example of which is shown in the accompanying drawings. The embodiments described with reference to the accompanying drawings below are illustrative, which are intended to explain the present disclosure, and cannot be understood as restrictions on the present disclosure.

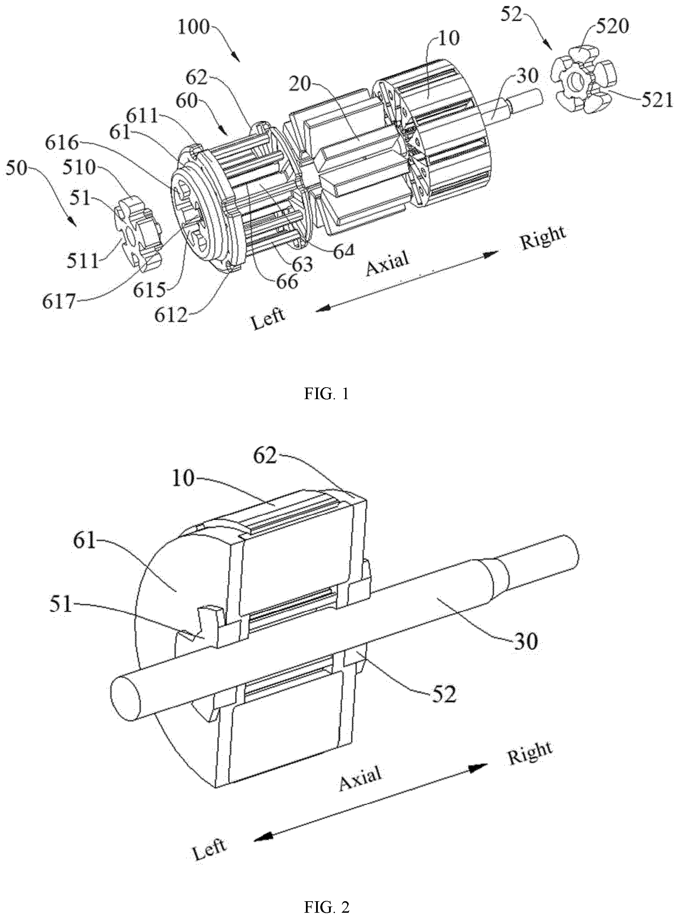

As shown in FIGS. 1 to 11, a rotor assembly 100 according to embodiments of the present disclosure includes a rotor core 10, a permanent magnet 20, a rotation shaft 30, a vibration damping member 60, and a transmission member 50.

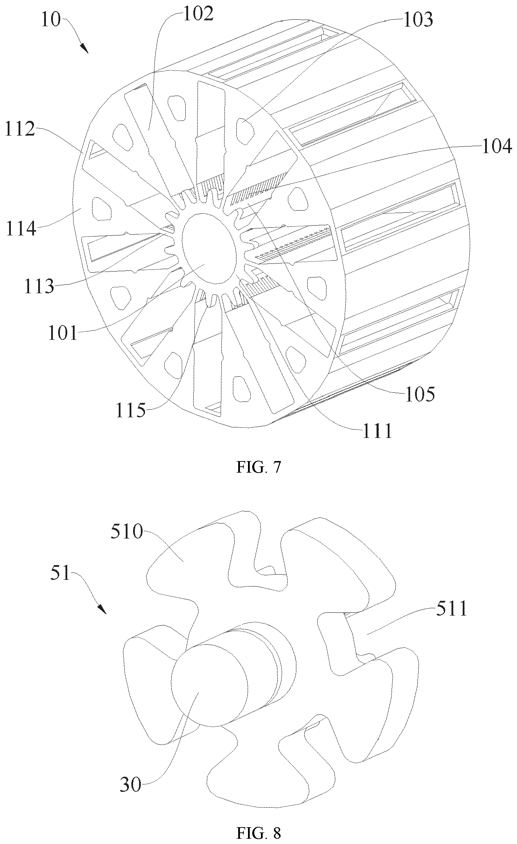

The rotor core 10 has a magnet groove 102 and a rotation shaft hole 101. As shown in FIGS. 1 and 7, the rotation hole 101 is defined substantially at a central position of the rotor core 10, and passes through the rotor core 10 in an axial direction of the rotor core 10 (in the left-right direction of FIGS. 1 and 7). A plurality of magnet grooves 102 is provided, and the plurality of magnet grooves 102 is evenly arranged at intervals around the rotation shaft hole 101 in a circumferential direction of the rotor core 10.

The permanent magnet 20 is disposed within the magnet groove 102. As shown in FIGS. 1 and 7, a plurality of permanent magnets 20 is provided, and one permanent magnet 20 is installed in each magnet groove 102 to allow the plurality of permanent magnets 20 be arranged at intervals in the circumferential direction of the rotor core 10.

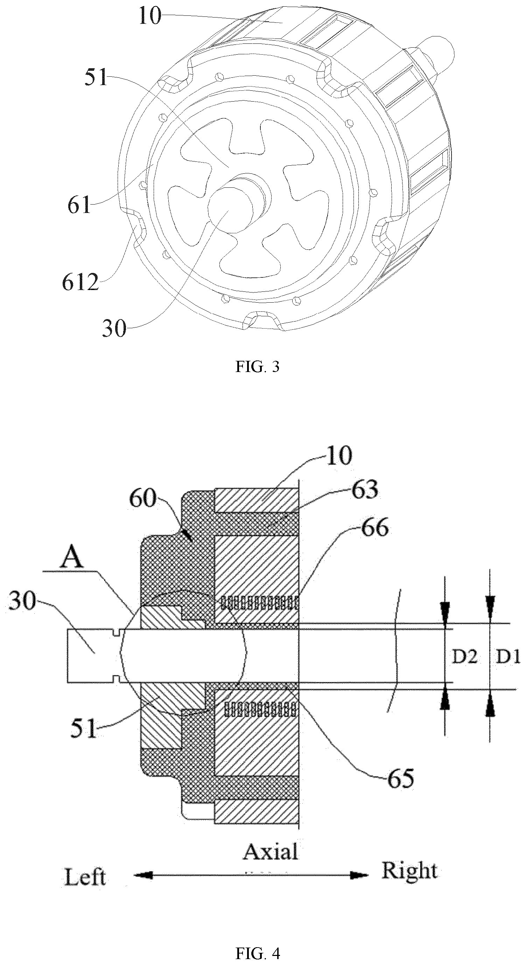

The rotation shaft 30 is disposed in the rotation shaft hole 101, and a gap is formed between the rotation shaft 30 and the rotor core 10. In other words, as shown in FIG. 4, a diameter D1 of an inner circular hole of the rotor core 10 is greater than a diameter D2 of the rotation shaft, that is, D1> D2. The rotation shaft 30 has a first end (the left end of the rotation shaft 30 in FIGS. 1 and 2) and a second end (the right end of the rotation shaft 30 in FIGS. 1 and 2) that extend out of the rotation shaft hole 101. As shown in FIGS. 1 and 2, an axial direction of the rotation shaft 30 is generally consistent with the axial direction of the rotor core 10, and the rotation shaft 30 passes via the rotor core 10 through the rotor hole 101.

The vibration damping member 60 includes a first end vibration damping member 61 disposed on a first end surface (the left end surface of the rotor core 10 in FIGS. 1 and 2) of the rotor core 10 and connected to the rotor core 10.

The transmission member 50 includes a first transmission member 51 disposed in the first end vibration damping member 61. The first transmission member 51 interacts with the rotation shaft 30. The rotor core 10 is capable of driving the rotation shaft at least sequentially by the first end vibration damping member 61 and the first transmission member 51. In other words, since a gap is defined between an inner circumferential wall of the rotation shaft hole 101 of the rotor core 10 and the rotation shaft 30, the rotation shaft 30 is driven at least by the first end vibration damping member 61 and the first transmission member 51, rather than being driven by the rotor core 10 directly.

As shown in FIGS. 1 to 4, the first end vibration damping member 61 is connected to the left end surface of the rotor core 10. The first end vibration damping member 61 may have a generally circular outer contour and a generally same outer diameter as the rotor core 10. The first transmission member 51 is disposed in the first end vibration damping member 61. The rotation shaft 30 at least passes through the rotor core 10 and the first transmission member 51 in the left-right direction. The first transmission member 51 directly interacts with the rotation shaft 30. thus, the rotor core 10 can drive the rotation shaft 30 at least sequentially by the first end vibration damping member 61 and the first transmission member 51. The first transmission member 51 and the rotation shaft 30 may interact with each other in several manners that can transmit a torque. For example, a section of the rotation shaft 30 that interacts with the first transmission member 51 has a non-circular cross-section, or the rotation shaft 30 may be keyed with the first transmission member 51. As a result, as the rotor core 10 rotates, the rotor core 10 can drive both the first end vibration damping member 61 and the first transmission member 51 that is disposed in the first end vibration damping member 61 to rotate, which in turn drives the rotation shaft 30 to rotate.

According to the rotor assembly of the embodiments of the present disclosure, by arranging the first end vibration damping member, which interacts with the rotation shaft by the first transmission member, on the first end surface of the rotor core, it is possible to avoid a rigid connection between the rotation shaft and the rotor core. The first transmission member can improve a rotation effect of the rotation shaft. Further, the amount of the material of the vibration damping is great, and the effect of the noise reduction and vibration damping is good. Furthermore, there is no different thermal expansion coefficients. In this way, a reliability of the rotor assembly is improved. The vibration damping member is only provided during a production process. The preparation process is relatively simple, and a defective rate is reduced in mass production.

In some embodiments, the first end vibration damping member 61 is made of a viscoelastic material, such as a rubber, a thermoplastic material, or the like. The present disclosure can significantly absorb, by using the viscoelastic material, an energy generated by resonance to achieve the vibration damping effect.

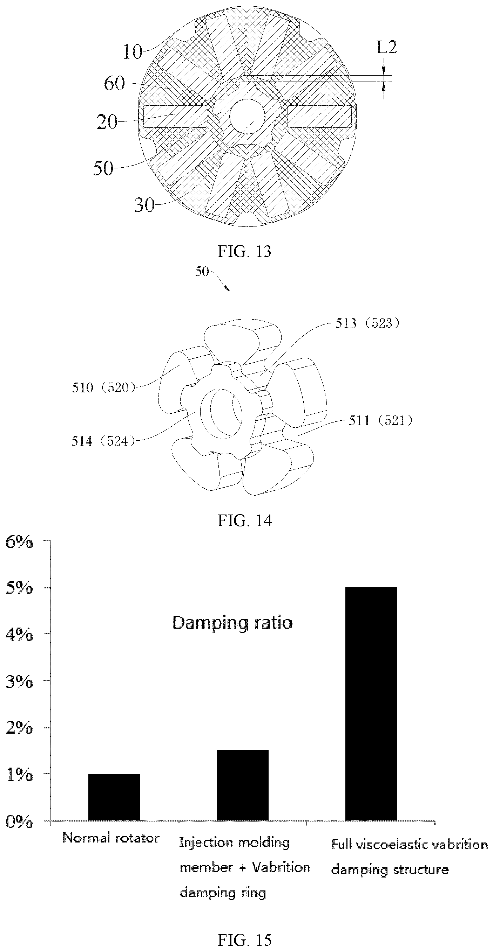

As shown in FIG. 15, in the present disclosure, by designing the end surfaces of the rotor core to be made of the viscoelastic material, it is possible to significantly increase a damping ratio of the rotor. Compared with a normal rotor (rigid connection) having an end structure including an injection molding member (an end plate) and a vibration damping ring, the end structure made of the viscoelastic material of the present disclosure has a greater damping ratio.

In some embodiments, a part of the first end vibration damping member 61 directly interacts with the rotation shaft 30. The rotor core 10 is also capable of driving the rotation shaft 30 by the part of the first end vibration damping member 61 and at least sequentially by the first end vibration damping member 61 and the first transmission member 51.

As shown in FIGS. 1, 2 and 4, the first transmission member 51 is located on a left side of the part of the first end vibration damping member 61. A left end of the rotation shaft 30 sequentially passes through the rotor core 10, the part of the first end vibration damping member 61 and the first transmission member 51, and extends out of the first transmission member 51. Each of the first transmission members 51 and the part of the first end vibration damping member 61 directly interacts with the rotation shaft 30. As a result, as the rotor core 10 rotates, the rotor core 10 can drive the first end vibration damping member 61 to rotate, and then the rotation shaft 30 is driven by the part of the first end vibration damping member 61 and the first transmission member 51 to rotate.

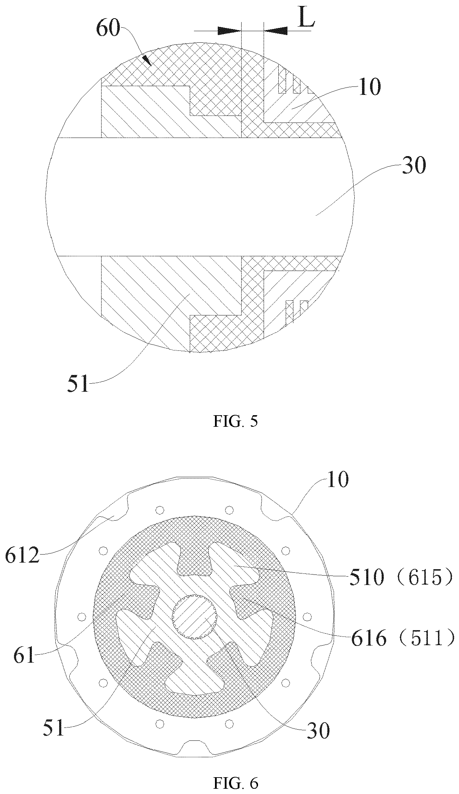

In some embodiments, as shown in FIG. 5, the part of the first end vibration damping member 61 has a thickness L in the axial direction of the rotation shaft, where L≥0.5 mm. As a result, a connection between the vibration damping member and the rotor core is more reliable, while increasing the amount of the material of the vibration damping member.

In some embodiments, the first transmission member 51 includes a first body 513 and a first boss 514. The first boss 514 protrudes from the first body 513 towards a first end surface of the rotor core 10. The rotation shaft 30 passes through the first body 513 and the first boss 514.

As shown in FIGS. 1, 14, and 12, the first boss 514 faces towards a left end surface of the rotor core 10. The first body 513 is engaged into a first central hole 617 of the first end vibration damping member 61. The first boss 514 interacts with the first end vibration damping member 61 in an interior of the first end vibration damping member 61. Each of the first body 513 and the first boss 514 has a first though hole defined therein. The rotation shaft 30 passes through the first body 513 and the first boss 514 by their first through holes. When the permanent magnet extends out of the end surface of the rotor core, a protrusion can be embedded into a central ring formed by circumferentially arranging the permanent magnet in the axial direction of the rotor core. Thus, it is possible to increase a torque transmission ability of the transmission member and improve a fatigue reliability of the vibration damping member. Further, it is possible to reduce an axial length of the rotor assembly, which is conducive to a miniaturized design of the motor.

There is a minimum distance L1 between the first boss 514 and the first surface of the rotor core 10 in the axial direction of the rotor core 10, where L1> 0.5 mm. As a result, while the connection between the vibration damping member and the rotor core is more reliable, increasing the amount of the material of the vibration damping member. Moreover, it is not only conducive to improving a vibration damping performance of the rotor, but also improving a liquidity during injection molding the vibration damping material, which can improve a production performance of the injection molding process.

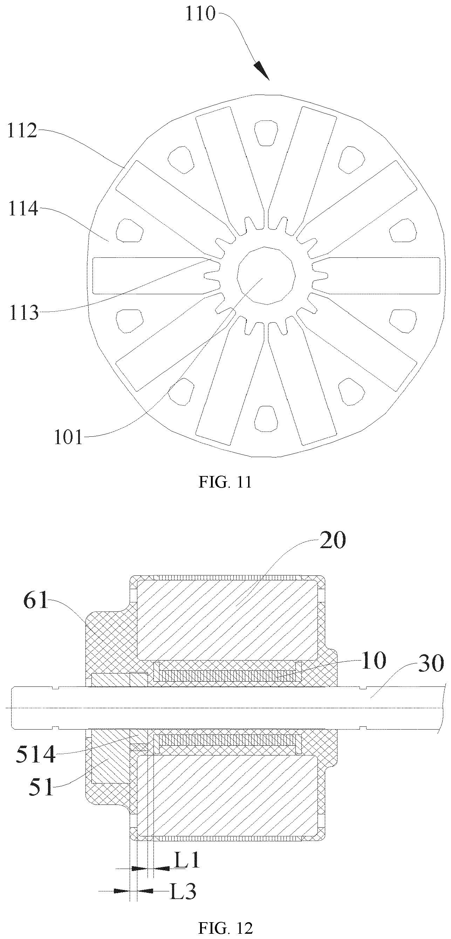

In some embodiments, as shown in FIG. 12, there is a minimum gap L2 formed between the first boss 514 and the permanent magnet 20 in a radial direction of the rotor core 10, where L2> 0.5 mm. As a result, the connection between the vibration damping member and the rotor core is more reliable, while increasing the amount of the material of the vibration damping member. Moreover, it is not only conducive to improving the vibration damping performance of the rotor, but also improving the liquidity during injection molding the vibration damping material, which can improve the production performance of the injection molding process.

In some embodiments, as shown in FIG. 11, there is a minimum gap L3 formed between the first body 513 and the permanent magnet 20 in the axial direction of the rotor core 10, where L3> 0.5 mm. As a result, the connection between the vibration damping member and the rotor core is more reliable, while increasing the amount of the material of the vibration damping member. Moreover, it is not only conducive to improving the vibration damping performance of the rotor, but also improving the liquidity during injection molding the vibration damping material, which can improve the production performance of the injection molding process.

It should be understood that the first transmission member 51 in the present disclosure is not limited to that shown in FIG. 13. For example, in other embodiments, as shown in FIG. 8, the first transmission member 51 has no boss provided thereon.

In some embodiments, the vibration damping member 60 also includes a second end vibration damping member 62. The second end vibration damping member 62 is disposed on a second end surface (the right end surface of the rotor core 10 in FIGS. 1 to 3) of the rotor core 10 and is connected to the rotor core 10. As shown in FIGS. 1 and 3, the second end vibration damping member 62 directly interacts with the rotation shaft 30. The rotor core 10 is also capable of driving the rotation shaft by the second end vibration damping member 62 and sequentially by the first end vibration damping member 61 and the first transmission member 51.

In some embodiments, each of the first end vibration damping member 61 and the second end vibration damping member 62 is made of a viscoelastic material, such as a rubber, a thermoplastic material, or the like. The present disclosure can significantly absorb, by using the viscoelastic material, the energy generated by the resonance to achieve the vibration damping effect.

In the present disclosure, by designing the end surface of the rotor core to be made of the viscoelastic material, it is possible to significantly increase the damping ratio of the rotor. Compared with the normal rotor (rigid connection) having an end structure including an injection molding member (an end plate) and a vibration damping ring, the end structure made of the viscoelastic material in the present disclosure has a greater damping ratio.

In some specific embodiments, the viscoelastic material has a loss factor greater than or equal to 0.15. Thus, an electromagnetic wave can be effectively absorbed and attenuated during an operation of the rotor of the motor.

Furthermore, the viscoelastic material has a Shore hardness ranging from 20 degrees to 80 degrees, thereby improving a manufacturability of the motor. For example, the viscoelastic material has a Shore hardness of 30 degrees, 40 degrees, or 50 degrees.

In some embodiments, the vibration damping member 60 also includes a second end vibration damping member 62. The second end vibration damping member 62 is disposed on a second end surface (the right end surface of the rotor core 10 in FIGS. 1 and 2) of the rotor core 10 and is connected to the rotor core 10.

The transmission member 50 also includes a second transmission member 52 disposed in the second end vibration damping member 62. The second transmission member 52 interacts with the rotation shaft 30. The rotor core 10 is also capable of driving the rotation shaft 30 sequentially by the second end vibration damping member 62 and the second transmission member 52.

As shown in FIGS. 1 to 4, the second end vibration damping member 62 is connected to the right end surface of the rotor core 10. The second end vibration damping member 62 may have a generally same contour and size as the first end vibration damping member 61. The second transmission member 52 is disposed in the second end vibration damping member 62. The rotation shaft 30 at least passes through the rotor core 10 and the second transmission member 52 in the left-right direction. The second transmission member 51 directly interacts with the rotation shaft 30. As a result, the rotor core 10 is also capable of driving the rotation shaft 30 at least sequentially by the second end vibration damping member 62 and the second transmission member 52. The second transmission member 52 and the rotation shaft 30 may be engaged with each other in several manners that can transmit the torque. For example, a section of the rotation shaft 30 that interacts with the second transmission member 52 has a non-circular cross-section, or the rotation shaft 30 may be keyed with the second transmission member 52. As a result, as the rotor core 10 rotates, the rotor core 10 can drive both the second end vibration damping member 62 and the second transmission member 52 that is disposed in the second end vibration damping member 62 to rotate, which in turn drives the rotation shaft 30 to rotate.

In some embodiments, the second end vibration damping member 61 is made of a viscoelastic material. Thus, both end surfaces of the rotor core has the viscoelastic material to further significantly absorb the energy generated by the resonance to achieve the vibration damping effect.

In some embodiments, as shown in FIG. 2, the part of the first end vibration damping member 61 and a part of the second end vibration damping member 62 are both directly engaged with the rotation shaft 30.

As shown in FIG. 2, the rotation shaft 30 passes through the first transmission members 51, the part of the first end vibration damping member 61, the rotor core 10, the part of the second end vibration damping member 62, and the second transmission member 52 sequentially in a left-to-right direction, and each of the first transmission member 51, the part of the first end vibration damping member 61, the rotor core 10, the part of the second end vibration damping member 62, and the second transmission member 52 directly interacts with the rotation shaft 30. As a result, as the rotor core 10 rotates, the rotor core 10 can drive the first end vibration damping member 61 and the second end vibration damping member 62 to rotate, and then the rotation shaft 30 is driven by the part of the first end vibration damping member 61, the first transmission member 51, the part of the second end vibration damping member 62, and the second transmission member 52 to rotate.

By arranging corresponding vibration damping members on both ends of the rotor core, it is possible to realizes a balanced vibration damping of the both ends of the rotor core while further increasing the amount of the material of the vibration damping member. Further, it is possible to improve a stability of an overall vibration damping of the rotor assembly, the noise reduction ability and the vibration damping effect. Furthermore, the reliability of the transmission of the vibration damping member can be improved.

In some embodiments, the second transmission member 52 includes a second body 523 and a second boss 524. The second boss 524 protrudes from the second body 523 towards the second end surface of the rotor core 10. The rotation shaft 30 passes through the second body 523 and the second boss 524.

As shown in FIGS. 1, 14, and 12, the second boss 514 faces towards a right end surface of the rotor core 10. The second body 523 is engaged into a second central hole 627 of the second end vibration damping member 62. The second boss 524 is engaged in the second end vibration damping member 62 in an interior of the second end vibration damping member 62. Each of the second body 523 and the second boss 524 has a first through hole defined therein. The rotation shaft 30 passes through the second body 523 and the second boss 524 by their first through holes.

In some embodiments, there is a minimum distance L1 between the second boss 524 and the right end surface of the rotor core 10 in the axial direction of the rotor core 10, where L1> 0.5 mm. There is a minimum gap L2 defined between the second boss 524 and the permanent magnet 20 in the radial direction of the rotor core 10, where L2> 0.5 mm. As a result, the connection between the vibration damping member and the rotor core is more reliable, while increasing the amount of material of the vibration damping member.

In some embodiments, a minimum gap L3 is formed between the second body 523 and the permanent magnet 20 in the axial direction of the rotor core 10, where L3> 0.5 mm. As a result, the connection between the vibration damping member and the rotor core is more reliable, while increasing the amount of the material of the vibration damping member.

It should be understood that the second transmission member 52 in the present disclosure is not limited to that shown in FIG. 13. For example, in other embodiments, as shown in FIG. 8, the second transmission member 52 has no boss provided thereon.

In some embodiments, each of the first end vibration damping member 61 and the second end vibration damping member 62 has an opening 612 defined thereon. A part of the rotor core 10 is exposed through the opening 612.

As shown in FIG. 1, each of the first end vibration damping member 61 and the second end vibration damping member 62 includes a plate portion 610 and a boss portion 611. A plurality of openings 612 is defined on an outer peripheral surface of the plate portion 610. The plurality of openings 612 is arranged at intervals in a circumferential direction of the plate portion 610 to partially expose the left end of the rotor core. In this way, the problem of insufficient strength of the rotor assembly structure can solved when the rotor assembly is magnetized. Thus, it is possible to ensure no significant deformation or loosening is generated when the whole rotor assembly is magnetized, which can achieve an overall magnetizing of the rotor assembly and improve a magnetizing efficiency.

A plurality of openings 612 may be defined on each of the first end vibration damping member 61 and the second end vibration damping member 62. The openings 612 defined on each of the first end vibration damping member 61 and the openings 612 have coincident projections formed on the end surfaces of rotor core 10. Positioning members installed through the openings 612 may be abutted against the rotor core 10 to fix the rotor core 10 between the first end vibration damping member 61 and the second end vibration damping member 62.

Since the openings 612 defined on each of the first end vibration damping member 61 and the second end vibration damping member 62 have coincident projections formed on the end surface of rotor core 10, the first end surface and the second end surface of the rotor core 10 have the same stress points and more uniform force.

A position of the openings 612 is not limited to the outer peripheral surface of the end vibration damping member. In other embodiments, for example, the openings 612 may be defined on the plate portion 610 or the boss portion 611 of each of the first end vibration damping member 61 and the second end vibration damping member 62, as long as the rotor core 10 is partially exposed to allow the positioning members to be abutted against the rotor core 10. In some embodiments, as shown in FIGS. 1 and 7, the vibration damping member 60 also includes an outer connection vibration damping member 63. The rotor core 10 has an axial through hole 103 located between adjacent magnet grooves 102. The outer connection vibration damping member 63 is disposed within the axial through hole 103. The outer connection vibration damping member 63 has a first end (the left end of the outer connection vibration damping member 63 in FIG. 1) connected to the first end vibration damping member 61 and a second end (the right end of the outer connection vibration damping member 63 in FIG. 1) connected to the second end vibration damping member 62.

As shown in FIGS. 1 and 7, a plurality of outer connection vibration damping members 63 is provided. The plurality of outer connection vibration damping members 63 is arranged at intervals in the circumferential direction of the rotor core 10, which will further increase the amount of the material of the vibration damping member, and improve the noise reduction capacity and the vibration damping effect. Further, the connection between the first end vibration damping member or the second end vibration damping member and the rotor core is more reliable.

In some embodiments, as shown in FIG. 4, the vibration damping member 60 also includes an inner connection vibration damping member 65 disposed within the gap between the rotation shaft 30 and the rotor core 10. The inner connection vibration damping member 65 has a first end (the left end of the inner connection vibration damping member 65 in FIG. 4) connected to the first end vibration damping member 61 and a second end (the right end of the inner connection vibration damping member 65 in FIG. 4) connected to the second end vibration damping member 62.

As shown in FIG. 4, the inner connection vibration damping member 65 is connected between the first end vibration damping member 61 and the second end vibration damping member 62. The plurality of outer connection vibration damping members 63 is arranged around an outside of the inner connection vibration damping member 65. The inner connection vibration damping member 65 surrounds the rotation shaft 30 and directly interacts with the rotation shaft 30. As a result, the amount of the material of the vibration damping member can be further increased, and the noise reduction capacity and vibration damping effect can be improved. Further, the inner connection vibration damping member directly interacts with the rotation shaft, which further improving the reliability of the transmission of the vibration damping member.

In some embodiments, as shown in FIG. 1, the vibration damping member 60 also includes a middle connection vibration damping member 64. An interspace 105 is defined between an inner surface of the permanent magnet 20 and an inner bottom surface of the magnet groove 102. The middle connection vibration damping member 64 is disposed in the interspace. The middle connection vibration damping member 64 has a first end (the left end of the middle connection vibration damping member 64 in FIG. 1) connected to the first end vibration damping member 61 and a second end (the right end of the middle connection vibration damping member 64 in FIG. 1) connected to the second end vibration damping member 62.

As shown in FIG. 1, a plurality of middle connection vibration damping members 64 is provided. The plurality of middle connection vibration damping members 64 is arranged at intervals in the circumferential direction of the rotor core 10. The middle connection vibration damping members 64 are arranged between the outer connection vibration damping member 63 and the inner connection vibration damping member 65. As a result, the connection between the vibration damping member and the rotor core is more reliable, while increasing the amount of the material of the vibration damping member.

In some embodiments, the rotor core 10 is formed by laminating a plurality of rotor laminations in the axial direction of the rotor core 10. Each of the rotor laminations includes at least one full-bridging lamination 110 and at least one half-bridging lamination 120. The rotor core 10 has a first end portion, a second end portion, and a middle section located between the first end portion and the second end portion. Each of the first end portion and the second end portion is formed by laminating a plurality of the full-bridging laminations 110. The middle section is formed by laminating a plurality of the half-bridging laminations 120.

As shown in FIGS. 7, 10, and 11, each of the rotor lamination includes a lamination body 111, an outer magnetic bridge 112, an inner magnetic bridge 113, and a magnetic pole 114. A plurality of magnetic poles 114 is arranged at intervals in the circumferential direction of the rotor core 10. At least some of the magnetic poles 114 are connected to the lamination body 111 by the inner magnetic bridge 113. The plurality of rotor laminations for forming the rotor core 10 include both the full-bridging laminations 110 and the half-bridging laminations 120. The full-bridging laminations 110 are located at both ends of the rotor core 10. The half-bridging laminations 120 are located in a middle of the rotor core 10.

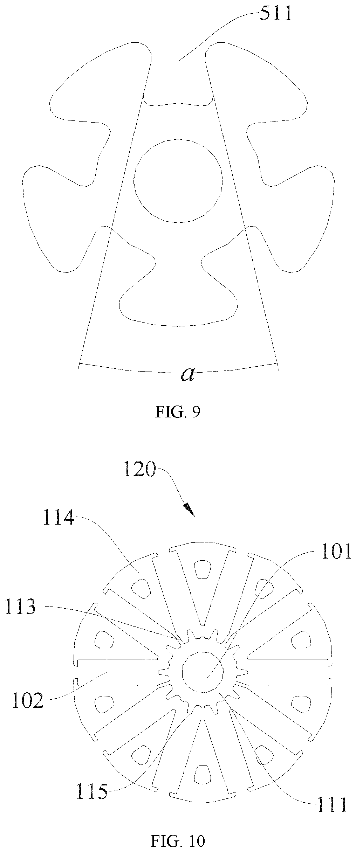

As shown in FIG. 10, some of the plurality of magnetic poles 114 of each half-bridging lamination 120 are connected to the lamination body 111 by the inner magnetic bridges 113, and the remaining magnetic poles 114 are space apart from the lamination body 111 in the radial direction of the rotor core 10. The some of the magnetic poles 114 are arranged alternately with the remaining magnetic poles 114 in the circumferential direction of the rotor core 10. The outer magnetic bridges 112 of each half-bridging lamination 120 are disconnected from each other between the adjacent magnetic poles 114.

As shown in FIG. 11, in the plurality of magnetic poles 114 of each full-bridging lamination 110, each magnetic pole 114 is connected to the lamination body 111 by one inner magnetic bridge 113, and the outer magnetic bridge 112 of the half-bridging lamination 120 is closed.

In the present embodiment, by arranging the full-bridging laminations at the ends of the rotor core, it is beneficial to a mold sealing material of the injection molding process, thereby avoiding burrs and flash from being generated in a molded product due to leakage of an injection molding liquid, and it is also possible to increase rigidity and strength of the rotor core.

In some embodiments, some of a plurality of inner magnetic bridges 113 of each half-bridging lamination 120 have magnetic bridge holes 104 defined thereon, and the magnetic bridge holes 104 pass through the respective inner magnetic bridges 113 in the circumferential direction of the rotor core 10. Inner magnetic bridges 113 of one of adjacent half-bridging laminations 120 in the axial direction of the rotor core 10 have magnetic bridge holes 104 defined thereon, and inner magnetic bridges 113 of the other of the adjacent half-bridging laminations 120 have no magnetic bridge hole 104 defined thereon. A circumferential connection vibration damping member 66 is disposed within each of the magnetic bridge holes 104. Adjacent middle connection vibration damping members 64 are connected to each other by the circumferential connection vibration damping member 66.

As shown in FIG. 7, the magnetic bridge hole 104 is defined on each inner magnetic bridge 113 of one of the adjacent half-bridging laminations 120, and no magnetic bridge hole 104 is defined on each inner magnetic bridge 113 of the other of the adjacent half-bridging laminations 120. The half-bridging lamination 120 having the magnetic bridge holes 104 are arranged alternately with the half-bridging lamination 120 having no magnetic bridge hole 104. The circumferential connection vibration damping members 66 are arranged in a plurality of rows that are arranged at intervals in the axial direction of the rotor core 10. Each row includes a plurality of circumferential connection vibration damping members 66 arranged at intervals in the circumferential direction of the rotor core 10. The adjacent middle connection vibration damping member 64 are connected by the plurality of circumferential connection vibration damping members 66 in each row.

In some embodiments, in adjacent half-bridging laminations 110 of the middle section, one of the adjacent half-bridging laminations 110 rotates one of the magnetic poles 114 relative to the other of the adjacent half-bridging laminations 110 in the circumferential direction of the rotor core 10. As a result, the inner magnetic bridges of the rotor core are formed into structure that are alternately connected to and disconnected from each other in the axial direction, which can improve an electromagnetic performance of the motor, thereby reducing energy consumption.

In some embodiments, at least one of the inner connection vibration damping members 65, the outer connection vibration damping member 63, the middle connection vibration damping member 64, and the circumferential connection vibration damping member 66 is made of a viscoelastic material, such as a rubber, a thermoplastic material or the like. The present disclosure can significantly absorb, by using the viscoelastic material, the energy generated by the resonance to achieve vibration damping effect.

In some embodiments, each of the first end vibration damping member 61, the second end vibration damping member 62, the inner connection vibration damping member 65, the outer connection vibration damping member 63, the middle connection vibration damping member 64, and the circumferential connection vibration damping member 66 is made of the viscoelastic material. In the present disclosure, by filling an interior, the ends and the magnetic bridge holes of the rotor core with the viscoelastic material, damping characteristics of the rotor core can be enhanced, thereby further improving the noise reduction and the vibration damping performance.

Moreover, the viscoelastic material on both end surfaces (the first end vibration damping member 61 and the second end vibration damping member 62) of the rotor core can be connected. In the actual manufacturing process, the both side ends may be integrally formed by using molds to fill the vibration damping material, thereby improving the manufacturability of the motor.

In some specific embodiments, the first end vibration damping member 61, the second end vibration damping member 62, the inner connection vibration damping member 65, the outer connection vibration damping member 63, the middle connection vibration damping member 64, and the circumferential connection vibration damping member 66 are integrally formed through the injection molding. As a result, the connection between the vibration damping member and the rotor core is tight and reliable, and the vibration damping member and the rotor core are not easily separated from each other, thereby improving the stability.

In some embodiments, the viscoelastic material has a loss factor greater than or equal to 0.15. Thus, the electromagnetic waves can be effectively absorbed and attenuated during the operation of the motor rotor.

Furthermore, the viscoelastic material has a Shore hardness ranging from 20 degrees to 80 degrees, thereby improving the manufacturability of the motor. For example, the viscoelastic material has a Shore hardness of 30 degrees, 40 degrees, or 50 degrees.

In some embodiments, the permanent magnet 20 has a length in the axial direction of the rotor core 10 greater than an axial length of the magnet groove 102. The permanent magnet 20 has a first end extending out of the magnet groove 102 and engaged into the first end vibration damping member 61 and a second end extending out of the magnet groove 102 and engaged into the second end vibration damping member 62. The rotor assembly of this embodiment can improve the electromagnetic performance of the motor and reduce the energy consumption. Further, the rotor assembly of this embodiment can allow the vibration damping member of the rotor assembly to withstand greater torque.

In some embodiments, as shown in FIGS. 1, 3, 6, 8, an outer peripheral wall of the first transmission member 51 has at least one first transmission radial protrusion 510 and at least one first transmission radial open groove 511. The first transmission radial open groove 511 is located between adjacent first transmission radial protrusions 510. The first end vibration damping member 61 has a first central hole 617. A peripheral wall of the first central hole 617 has at least one first vibration damping radial protrusion 616 and at least one first vibration damping radial inner open groove 615. The first vibration damping radial inner open groove 615 is located between adjacent first vibration damping radial protrusions 616. The first transmission radial protrusion 510 is engaged into the first vibration damping radial inner open groove 615. The first vibration damping radial protrusion 616 is engaged into the first transmission radial open groove 511.

As shown in FIGS. 1, 3, 6, 8, and 9, a plurality of first transmission radial protrusions 510 and a plurality of first transmission radial open grooves 511 are disposed on the outer peripheral wall of the first transmission member 51. Each of the first transmission radial open grooves 511 has a cone angle a, where α≥5 °. Further, each of the first transmission radial open grooves 511 is gradually tapered radially outwardly. The plurality of first transmission radial protrusions 510 is arranged at intervals in the circumferential direction of the rotor core 10. One first transmission radial open groove 511 is formed between every two adjacent first transmission radial protrusions 510.

An outer peripheral wall of the first central hole 617 of the first end vibration damping member 61 has a plurality of first vibration damping radial protrusions 616 and a plurality of first vibration damping radial open grooves 615. The plurality of first vibration damping radial protrusions 616 is arranged at intervals in the circumferential direction of the rotor core 10. One first vibration damping radial open groove 615 is formed between every two adjacent first vibration damping radial protrusions 616.

The first transmission member 51 is disposed in the first end vibration damping member 61, and the first transmission radial protrusions 510 are engaged into the respective first vibration damping radial open grooves 615. The first vibration damping radial protrusions 616 are engaged into the respective first transmission radial open grooves 511.

Furthermore, an outer peripheral wall of the second transmission member 52a has at least one second transmission radial protrusion 520 and at least one second transmission radial open groove 521. The second transmission radial open groove 521 is located between adjacent second transmission radial protrusions 520. The second end vibration damping member 62 has a second central hole (not shown). A peripheral wall of the second central hole has at least one second vibration damping radial protrusion (not shown) and at least one second vibration damping radial open groove (not shown). The second vibration damping radial open groove is located between adjacent second vibration damping radial protrusions. The second transmission radial protrusion 520 is engaged into the second vibration damping radial open groove, and the second vibration damping radial protrusion is engaged into the second transmission radial open groove 521. In some embodiments, the engagement manner of the second transmission member 52 with the second end vibration damping member 62 may refer to the engagement manner of the first transmission member 51 with the first end vibration damping member 61.

In some embodiments, the permanent magnet 20 has a length in the axial direction of the rotor core 10 greater than an axial length of the magnet groove 102. The permanent magnet 20 has a first end extending out of the magnet groove 102 and engaged into the first end vibration damping member 61 and a second end extending out of the magnet groove 102 and engaged into the second end vibration damping member 62. The rotor assembly of the present embodiment can improve the electromagnetic performance of the motor and reduce the energy consumption. Further, the rotor assembly of the present embodiment can allow the vibration damping member of the rotor assembly to withstand a greater torque.

An exemplary rotor assembly according to embodiments of the present disclosure is described below with reference to FIGS. 1 to 11.

As shown in FIGS. 1 to 5, a rotor assembly 100 according to embodiments of the present disclosure includes a rotor core 10, a plurality of permanent magnets 20, a rotation shaft 30, a transmission member 50, and a vibration damping member 60.

The rotor core 10 has a rotation shaft hole 101, a plurality of magnet grooves 102, a plurality of axial through holes 103, and a plurality of magnetic bridge holes 104. The rotation shaft hole 101 is substantially defined at a central position of the rotor core 10 and passes through the rotor core 10 in an axial direction of the rotor core 10. The plurality of magnetic grooves 102 is evenly arranged around the rotation shaft hole 101 at intervals in a circumferential direction of the rotor core 10. One axial through hole 103 is defined between any two adjacent magnet grooves 102.

The rotor core 10 is formed by laminating a plurality of rotor laminations in the axial direction of the rotor core 10. The laminations of the plurality of rotor laminations located on left and right ends of the rotor core 10 are full-bridging laminations 110, and the laminations of the plurality of rotor laminations located in the middle are half-bridging laminations 120.

Each of the rotor laminations includes a lamination body 111, an outer magnetic bridge 112, an inner magnetic bridge 113, and a magnetic pole 114. Each of the plurality of magnetic poles 114 of each full-bridging lamination 110 is connected to the lamination body 111 by the inner magnetic bridge 113. A plurality of bumps 115 arranged at intervals are disposed on an outer periphery of the lamination body 111. One bump 115 is disposed between adjacent inner magnetic bridges 113. The outer magnetic bridge 112 of each half-bridging lamination 120 is closed.

The outer magnetic bridge 112 of each half-bridging lamination 120 is disconnected between adjacent magnetic poles 114. some of the plurality of magnetic poles 114 of each half-bridging lamination 120 are connected to the lamination body 111 by the respective inner magnetic bridges 113, and the remaining magnetic poles 114 are space apart from the lamination body 111 in a radial direction of the rotor core 10. The some of the magnetic poles 114 and the remaining magnetic poles 114 are arranged alternately in the circumferential direction of the rotor core 10. One of adjacent half-bridging laminations 110 of the middle section rotates one of the magnetic poles 114 relative to the other of the adjacent half-bridging laminations 110 in the circumferential direction of the rotor core 10. As a result, the inner magnetic bridges of the rotor core are formed into structures that are alternately connected to and disconnected from each other in the axial direction, which can improve an electromagnetic performance of the motor, thereby reducing energy consumption.

Some of the plurality of inner magnetic bridges 113 of each half-bridging lamination 120 have magnetic bridge holes 104 defined thereon, and the magnetic bridge holes 104 pass through the respective inner magnetic bridges 113 in the circumferential direction of the rotor core 10. The inner magnetic bridges 113 of one of adjacent half-bridging laminations 120 in the axial direction of the rotor core 10 have magnetic bridge holes 104 defined thereon, and the inner magnetic bridge 113 of the other of the adjacent half-bridging laminations 120 have no magnetic bridge hole 104 defined thereon

The plurality of permanent magnets 20 is disposed in the plurality of magnet grooves 102 in a one-to-one correspondence, to allow the plurality of permanent magnets 20 to be arranged at intervals in the circumferential direction of the rotor core 10. An interspace 105 is formed between an inner surface of each permanent magnet 20 and an inner bottom surface of the corresponding magnet groove 102.

The rotation shaft 30 has an axial direction generally consistent with the axial direction of the rotor core 10, and the rotation shaft 30 passes through the rotor core 10 via the rotor hole 101. A gap is formed between the rotation shaft 30 and the rotor core 10.

The vibration damping member 60 includes a first end vibration damping member 61, a second end vibration damping member 62, an outer connection vibration damping member 63, a middle connection vibration damping member 64, an inner connection vibration damping member 65, and a circumferential connection vibration damping member 66. The vibration damping member 60 is integrally formed through injection molding by a viscoelastic material. In addition, the viscoelastic material has a loss factor greater than or equal to 0.15 and a Shore hardness ranging from 20 degrees to 80 degrees.

The first end vibration damping member 61 is connected to a left end surface of the rotor core 10, and the second end vibration damping member 62 is connected to a right end surface of the rotor core 10. The rotation shaft 30 passes through the first end vibration damping member 61, the rotor core 10 and the second end vibration damping member 62 sequentially in a left-to-right direction. An inner peripheral surface of the first end vibration damping member 61 directly interacts with an outer peripheral surface of the rotation shaft 30, and an inner peripheral surface of the second end vibration damping member 62 is directly engaged with an outer peripheral surface of the rotation shaft 30.

Each of the first end vibration damping member 61 and the second end vibration damping member 62 includes a plate portion 610 and a boss portion 611. A plurality of openings 612 is defined on an outer peripheral surface of the plate portion 610. The plurality of openings 612 is arranged at intervals in a circumferential direction of the plate portion 610. The boss portion 611 of the first end vibration damping member 61 protrudes leftwards from the left end surface of the first end vibration damping member 61, and the boss portion 621 of the second end vibration damping member 62 protrudes rightwards from the right end surface of the second end vibration damping member 62.

An outer peripheral wall of the first central hole 617 of the first end vibration damping member 61 has a plurality of first vibration damping radial protrusions 616 and a plurality of first vibration damping radial open grooves 615. The plurality of first vibration damping radial protrusions 616 is arranged at intervals in the circumferential direction of the rotor core 10. One first vibration damping radial open groove 615 is formed between every two adjacent first vibration damping radial protrusions 616.

The second end vibration damping member 62 has a second central hole. An outer peripheral wall of the second central hole has a plurality of second vibration damping radial protrusions and a plurality of second vibration damping radial open grooves. The plurality of second vibration damping radial protrusions 616 is arranged at intervals in the circumferential direction of the rotor core 10. One second vibration damping radial open groove 615 is formed between every two adjacent second vibration damping radial protrusions 616.

The inner connection vibration damping member 65 is disposed in the gap between the rotation shaft 30 and the rotor core 10. The inner connection vibration damping member 65 has a left end connected to the first end vibration damping member 61 and a right end connected to the second end vibration damping member 62.

The outer connection vibration damping member 63 is disposed within the axial through hole 103. The outer connection vibration damping member 63 has a left end connected to the first end vibration damping member 61 and a right end connected to the second end vibration damping member 62. Thus, a plurality of outer connection vibration damping members 63 may be provided. The plurality of outer connection vibration damping members 63 is arranged at intervals in the circumferential direction of the rotor core 10 and surrounds around an outside of the inner connection vibration damping member 65.

The middle connection vibration damping member 64 is disposed in the interspace 105. The middle connection vibration damping member 64 has a left end connected to the first end vibration damping member 61 and a right end connected to the second end vibration damping member 62. Thus, a plurality of middle connection vibration damping members 64 may be provided. The plurality of middle connection vibration damping members 64 is arranged at intervals in the circumferential direction of the rotor core 10, and the middle connection vibration damping members 64 are arranged between the outer connection vibration damping member 63 and the inner connection vibration damping member 65.

The circumferential connection vibration damping members 66 are arranged in a plurality of rows that are arranged at intervals in the axial direction of the rotor core 10. Each row includes a plurality of circumferential connection vibration damping members 66 arranged at intervals in the circumferential direction of the rotor core 10. The adjacent middle connection vibration damping members 64 are connected by the plurality of circumferential connection vibration damping members 66 in each row.

The first end vibration damping member 61, the second end vibration damping member 62, the inner connection vibration damping member 65, the outer connection vibration damping member 63, the middle connection vibration damping member 64, and the circumferential connection vibration damping member 66 are integrally formed through injection molding with a material such as a rubber or a thermoplastic elastomer. As a result, the vibration damping member has a relatively low hardness and rigidity as well as good vibration damping effect. Further, the connection between the vibration damping member and the rotor core is tight and reliable, and the vibration damping member and the rotor core are not easily separated from each other, thereby improving the stability.

The transmission member 50 include a first transmission member 51 and a second transmission member 52. An outer peripheral wall of the first transmission member 51 has a plurality of first transmission radial protrusions 510 and a plurality of first transmission radial open groove 511. The plurality of first transmission radial protrusions 510 is arranged at intervals in the circumferential direction of the rotor core 10. One first transmission radial open groove 511 is formed between every two adjacent first transmission radial protrusions 510. The first transmission member 51 is disposed in the first end vibration damping member 61. The first transmission radial protrusion 510 is engaged into the first vibration damping radial open groove 615. The first vibration damping radial protrusion 616 is engaged into the first transmission radial open groove 511.

The first boss 514 faces towards a left end surface of the rotor core 10. The first body 513 interacts with the first central hole 617 of the first end vibration damping member 61. The first boss 514 is engaged into an interior of the first end vibration damping member 61. Each of the first body 513 and the first boss 514 has a first though hole. The rotation shaft 30 passes through the first body 513 and the first boss 514 by corresponding first through holes. There is a minimum distance L1 between the first boss 514 and the first surface of the rotor core 10 in the axial direction of the rotor core 10, where L1> 0.5 mm. A minimum gap L2 is formed between the first boss 514 and the permanent magnet 20 in the radial direction of the rotor core 10, where L2> 0.5 mm. A minimum gap L3 is formed between the first body 513 and the permanent magnet 20 in the axial direction of the rotor core 10, where L3> 0.5 mm.

An outer peripheral wall of the second transmission member 52 has a plurality of second transmission radial protrusions 520 and a plurality of second transmission radial open groove 521. The plurality of second transmission radial protrusions 520 is arranged at intervals in the circumferential direction of the rotor core 10. One second transmission radial open groove 521 is formed between every two adjacent second transmission radial protrusions 520. The second transmission member 52 is disposed in the second end vibration damping member 62. The second transmission radial protrusion 520 is engaged into a second vibration damping radial open groove. A second vibration damping radial protrusion is engaged into the second transmission radial open groove 521.

The second boss 524 faces towards a right end surface of the rotor core 10. The second body 523 interacts with the second central hole 627 of the right end vibration damping member 62. The second boss 524 is engaged into a boss opening (not shown) in an interior of the second end vibration damping member 62. The second transmission member 52 is installed in the second end vibration damping member 62. There is a minimum distance L1 between the second boss 524 and the right end surface of the rotor core 10 in the axial direction of the rotor core 10, where L1> 0.5 mm. A minimum gap L2 is formed between the second boss 524 and the permanent magnet 20 in the radial direction of the rotor core 10, where L2> 0.5 mm. A minimum gap L3 is formed between the second body 523 and the permanent magnet 20 in the axial direction of the rotor core 10, where L3> 0.5 mm.

The rotation shaft 30 passes through the first transmission members 51, a part of the first end vibration damping member 61, the rotor core 10, a part of the second end vibration damping member 62, and the second transmission member 52 sequentially in a left-to-right direction. Further, each of the first transmission member 51, the part of the first end vibration damping member 61, the rotor core 10, the part of the second end vibration damping member 62, and the second transmission member 52 directly interacts with the rotation shaft 30. As a result, as the rotor core 10 rotates, the rotor core 10 can drive the first end vibration damping member 61 and the second end vibration damping member 62 to rotate, and then the rotation shaft 30 is driven by the part of the first end vibration damping member 61, the first transmission member 51, the part of the second end vibration damping member 62, and the second transmission member 52 to rotate.

A specific process of the rotor assembly according to embodiments of the present disclosure will be described below:
preparing a rotor core, a permanent magnet, a rotation shaft and a transmission member, respectively;
sleeving the rotor core over the rotation shaft through a rotation shaft hole;
placing the rotor core, the rotation shaft and the transmission member that are assembled together into a mold together to position the rotor core, the rotation shaft and the transmission member in place, and inserting a plurality of permanent magnets into a plurality of magnet grooves of the rotor core, respectively; and
forming integrally the rotor core, the permanent magnet, the rotation shaft and the transmission member into an integral overmolding structure with a rubber or a viscoelastic material through injection molding process, wherein the structure formed by the rubber or the viscoelastic material is the vibration damping member.

A motor according to the embodiments of the present disclosure includes the rotor assembly 100 according to any one of the embodiments as described above.

In the motor according to the embodiments of the present disclosure, by modifying the structure of the rotor assembly, the vibration damping member and the transmission member can be disposed on at least the ends of the rotor core. Further, at least a part of the vibration damping member can be directly engaged with the rotation shaft, and the other part of the vibration damping member can be engaged with the rotation shaft by the transmission member. In this way, the rigid connection between the rotation shaft and the rotor core can be avoided. Meanwhile, the amount of the material of the vibration damping member can be increased, thereby improving the noise reduction and vibration damping effect of the whole motor.

In the description of the present disclosure, it should be understood that, orientation or position relationship indicated terms such as "central", "longitudinal", "transverse", "lateral", "length", "width", "thickness", "upper", "lower", "front", "rear", "left", "right", "vertical", "horizontal", "top", "bottom", "inner", "outer", "clockwise", "counterclockwise", "axial", "radial", "circumferential direction", or the like is based on the orientation or position relationship shown in the accompanying drawings, and is only for the convenience of describing the present disclosure and simplifying the description, rather than indicating or implying that the device or element as described must have a specific orientation or must be constructed and operated in a specific orientation. Thus, the orientation or position relationship indicated by these terms cannot be understood as limitations on the present disclosure.

In addition, the terms "first" and "second" are only used for purpose of description, and cannot be understood as indicating or implying relative importance or implicitly indicating the number of indicated technical features. Therefore, the features defined with the terms "first" and "second" may explicitly or implicitly include at least one of the features. In the description of the present disclosure, "a plurality of' means at least two, for example, two or three, unless otherwise specifically defined.

In the description of the present disclosure, it should be noted that, unless otherwise expressly specified and defined, terms such as "installed", "mounted", "connected to", "connected with", "fixed" and the like should be understood in a broad sense. For example, it may be a fixed connection or a detachable connection or an integral connection; it may be a mechanical connection or an electrical connection or a mutual communication; it may be a direct connection or an indirect connection by an intermediate; it may be an internal communication of two components or an interaction relationship between two components, unless otherwise expressly specified. For those of ordinary skill in the art, the specific meaning of the above-mentioned terms in the present disclosure can be understood as desired.

In the present disclosure, unless expressly specified and defined otherwise, the first feature being "on" or "beneath" the second feature may indicate that the first feature is in direct contact with the second feature, or in indirectly contact with the second feature by an intermediate. Moreover, the first feature being "above", "over" or "on" the second feature may indicate that the first feature is directly over or obliquely above the second feature, or merely indicate that a level of the first feature is higher than that of the second feature. The first feature being "under", "below" or "beneath" the second feature may indicate that the first feature is directly under or obliquely below the second feature, or merely indicate that a level of the first feature is lower than that of the second feature.

Reference throughout this specification to "an embodiment", "some embodiments", "an example", "specific examples", or "some examples" means that a particular feature, structure, material, or characteristic described in connection with the embodiment or example is included in at least one embodiment or example of the present disclosure. Thus, the appearances of the above phrases throughout this specification are not necessarily referring to the same embodiment or example of the present disclosure. Furthermore, the particular features, structures, materials, or characteristics as described may be combined in any suitable manner in one or more embodiments or examples. Furthermore, those skilled in the art may combine different embodiments or examples described in this specification as well as the features of the different embodiments or examples, without conflicting each other.

## Claims

1. A rotor assembly (100), comprising a rotor core (10) having at least one magnet groove (102) and a rotation shaft hole (101); a permanent magnet (20) disposed in the at least one magnet groove (102); a rotation shaft (30) disposed in the rotation shaft hole (101), wherein a gap is defined between the rotation shaft (30) and the rotor core (10), and wherein the rotation shaft (30) has a first end and a second end that extend out of the rotation shaft hole (101); a first end vibration damping member (61) disposed on a first end surface of the rotor core (10) and connected to the rotor core (10); and a first transmission member (51) disposed within the first end vibration damping member (61), wherein the first transmission member (51) interacts with the rotation shaft (30), and wherein the rotor core (10) is capable of driving the rotation shaft (30) at least sequentially by the first end vibration damping member (61) and the first transmission member (51) **characterised in that** a part of the first end vibration damping member (61) directly interacts with the rotation shaft (30), and wherein the rotor core (10) is further capable of driving the rotation shaft (30) by the part of the first end vibration damping member (61) and sequentially by the first end vibration damping member (61) and the first transmission member (51), optionally, wherein the part of the first end vibration damping member (61) has a thickness L in an axial direction of the rotation shaft, where Lid 0.5 mm.

2. The rotor assembly (100) according to claim 1, wherein the first transmission member (51) comprises a first body (513) and a first boss (514) protruding from the first body (513) towards the first end surface of the rotor core (10), wherein the rotation shaft (30) passes through the first body (513) and the first boss (514), and a minimum distance between the first boss (514) and the first end surface of the rotor core (10) in an axial direction of the rotor core (10) is L1 greater than 0.5 mm, optionally, wherein a minimum gap between the first boss (514) and the permanent magnet (20) in a radial direction of the rotor core (10) is L2 greater than 0.5 mm, and wherein a minimum gap between the first body (513) and the permanent magnet (20) in the axial direction of the rotor core (10) is L3 greater than 0.5 mm.

3. The rotor assembly (100) according to claims 1 or 2, further comprising a second end vibration damping member (62) disposed on a second end surface of the rotor core (10) and connected to the rotor core (10), wherein the second end vibration damping member (62) directly interacts with the rotation shaft (30), and wherein the rotor core (10) is further capable of driving the rotation shaft (30) by the second end vibration damping member (62) and sequentially by the first end vibration damping member (61) and the first transmission member (51).

4. The rotor assembly (100) according to claim 3, wherein each of the first end vibration damping member (61) and the second end vibration damping member (62) is made of a viscoelastic material, optionally,
wherein the viscoelastic material has a loss factor greater than or equal to 0.15 and a Shore hardness ranging from 20 degrees to 80 degrees, or, the rotor assembly further comprising an outer connection vibration damping member, wherein the rotor core has an axial through hole located between adjacent magnet grooves, wherein the outer connection vibration damping member is disposed within the axial through hole, and wherein the outer connection vibration damping member has a first end connected to the first end vibration damping member and a second end connected to the second end vibration damping member.

5. The rotor assembly (100) according to any one of claims 1 to 3, further comprising a second end vibration damping member (62) disposed on a second end surface of the rotor core (10) and connected to the rotor core (10); and a second transmission member (52) disposed in the second end vibration damping member (62), wherein the second transmission member (52) interacts with the rotation shaft (3), and wherein the rotor core (10) is further capable of driving the rotation shaft (30) sequentially by the second end vibration damping member and the second transmission member.

6. The rotor assembly (100) according to claim 5, wherein a part of the first end vibration damping member (61) directly interacts with the rotation shaft (30), and wherein a part of the second end vibration damping member (62) directly interacts with the rotation shaft (30), or, wherein each of the first end vibration damping member (61) and the second end vibration damping member (62) has an opening defined thereon, and wherein a part of the rotor core (30) is exposed through the opening, or, wherein the rotor assembly (100) further comprising an outer connection vibration damping member (63), wherein the rotor core (10) has an axial through hole (103) located between adjacent magnet grooves (102), wherein the outer connection vibration damping member (63) is disposed within the axial through hole (103), and wherein the outer connection vibration damping member (63) has a first end connected to the first end vibration damping member (61) and a second end connected to the second end vibration damping member (62), or, wherein a length of the permanent magnet (20) in an axial direction of the rotor core (10) is greater than an axial length of the magnet groove (102), wherein the permanent magnet (20) has a first end extending out of the at least one magnet groove (102) and engaged into the first end vibration damping member (61) and a second end extending out of the at least one magnet groove (102) and engaged into the second end vibration damping member (62).

7. The rotor assembly (100) according to claim 4 or 6, further comprising an inner connection vibration damping member (65) disposed in the gap between the rotation shaft (30) and the rotor core (10), wherein the inner connection vibration damping member (65) has a first end connected to the first end vibration damping member (61) and a second end connected to the second end vibration damping member (62).

8. The rotor assembly (100) according to claim 7, further comprising a middle connection vibration damping member (64), wherein an interspace (105) is defined between an inner surface of the permanent magnet (20) and an inner bottom surface of the at least one magnet groove (102), wherein the middle connection vibration damping member (64) is disposed in the interspace (105), wherein the middle connection vibration damping member (64) has a first end connected to the first end vibration damping member (61) and a second end connected to the second end vibration damping member.

9. The rotor assembly according to claim 8, wherein the rotor core (10) is formed by laminating a plurality of rotor laminations in an axial direction of the rotor core (10), wherein the plurality of rotor laminations comprises at least one full-bridging lamination (110) and at least one half-bridging lamination (120), wherein the rotor core (10) has a first end portion, a second end portion, and a middle section located between the first end portion and the second end portion, wherein each of the first end portion and the second end portion is formed by laminating a plurality of full-bridging laminations (110), and wherein the middle section is formed by laminating a plurality of half-bridging laminations (120).

10. The rotor assembly (100) according to claim 9, wherein one of adjacent half-bridging laminations (120) of the intermediate section in the axial direction of the rotor core (10) is capable of rotating at least one magnetic pole relative to the other of the adjacent half-bridging laminations (120) in a circumferential direction of the rotor core, or, wherein some of a plurality of inner magnetic bridges (113) of the at least one half-bridging lamination (120) have magnetic bridge holes (104) defined thereon, wherein the magnetic bridge holes (104) pass through the inner magnetic bridges (113) in the circumferential direction of the rotor core (10), wherein inner magnetic bridges (113) of one of adjacent half-bridging laminations (120) in the axial direction of the rotor core (10) have magnetic bridge holes (104), and inner magnetic bridges (113) of the other of the adjacent half-bridging laminations (120) have no magnetic bridge hole (104), wherein a circumferential connection vibration damping member (66) is disposed within the magnetic bridge hole (104), and wherein adjacent middle connection vibration damping members (64) are connected to each other by the circumferential connection vibration damping member (66).

11. The rotor assembly (100) according to claim 10, wherein each of the first end vibration damping member (61), the second end vibration damping member (62), the inner connection vibration damping member (65), the outer connection vibration damping member (63), the middle connection vibration damping member (64), and the circumferential connection vibration damping member (66) is made of a viscoelastic material.

12. The rotor assembly according to claim 11, wherein the first end vibration damping member (61), the second end vibration damping member (62), the inner connection vibration damping member (65), the outer connection vibration damping member (63), the middle connection vibration damping member (64), and the circumferential connection vibration damping member (66) are integrally formed through injection molding, optionally, wherein the viscoelastic material has a loss factor greater than or equal to 0.15 and a Shore hardness ranging from 20 degrees to 80 degrees.

13. The rotor assembly (100) according to claim 1, wherein an outer peripheral wall of the first transmission member (51) has at least one first transmission radial protrusion (510) and at least one first transmission radial open groove (511) located between adjacent first transmission radial protrusions (510), wherein the first end vibration damping member (61) has a first central hole (617), wherein a peripheral wall of the first central hole (617) has at least one first vibration damping radial protrusion (616) and at least one first vibration damping radial open groove (615) located between adjacent first vibration damping radial protrusions (616), wherein the at least one first transmission radial protrusion (510) is engaged into the at least one first vibration damping radial open groove (615), and wherein the at least one first vibration damping radial protrusion (616) is engaged into the at least one first transmission radial open groove (511).

14. A motor, comprising the rotor assembly (100) according to any one of claims 1 to 13.

## Patentansprüche

1. Rotoranordnung (100), umfassend: einen Rotorkern (10) mit mindestens einer Magnetnut (102) und einem Drehwellenloch (101); einen Permanentmagneten (20), der in der mindestens einen Magnetnut (102) angeordnet ist; eine Drehwelle (30), die in dem Drehwellenloch (101) angeordnet ist, wobei zwischen der Drehwelle (30) und dem Rotorkern (10) ein Spalt definiert ist und wobei die Drehwelle (30) ein erstes Ende und ein zweites Ende aufweist, die sich aus dem Drehwellenloch (101) heraus erstrecken; ein erstes Endvibrationsdämpfungselement (61), das auf einer ersten Endoberfläche des Rotorkerns (10) angeordnet und mit dem Rotorkern (10) verbunden ist; und ein erstes Übertragungselement (51), das in dem ersten Endvibrationsdämpfungselement (61) angeordnet ist, wobei das erste Übertragungselement (51) mit der Drehwelle (30) interagiert und wobei der Rotorkern (10) in der Lage ist, die Drehwelle (30) mindestens der Reihe nach über das erste Endvibrationsdämpfungselement (61) und das erste Übertragungselement (51) anzutreiben, **dadurch gekennzeichnet, dass**
ein Teil des ersten Endvibrationsdämpfungselements (61) direkt mit der Drehwelle (30) interagiert und wobei der Rotorkern (10) ferner in der Lage ist, die Drehwelle (30) über den Teil des ersten Endvibrationsdämpfungselements (61) und der Reihe nach über das erste Endvibrationsdämpfungselement (61) und das erste Übertragungselement (51) anzutreiben, wobei optional der Teil des ersten Endvibrationsdämpfungselements (61) eine Dicke L in einer Axialrichtung der Drehwelle aufweist, wobei L≥0,5 mm.

2. Rotoranordnung (100) nach Anspruch 1, wobei das erste Übertragungselement (51) einen ersten Körper (513) und eine von dem ersten Körper (513) in Richtung der ersten Endoberfläche des Rotorkerns (10) vorstehende erste Nabe (514) umfasst, wobei die Drehwelle (30) durch den ersten Körper (513) und die erste Nabe (514) läuft und ein Mindestabstand zwischen der ersten Nabe (514) und der ersten Endoberfläche des Rotorkerns (10) in einer Axialrichtung des Rotorkerns (10) L1 größer als 0,5 mm ist, wobei optional ein minimaler Spalt zwischen der ersten Nabe (514) und dem Permanentmagnet (20) in einer Radialrichtung des Rotorkerns (10) L2 größer als 0,5 mm ist und wobei ein minimaler Spalt zwischen dem ersten Körper (513) und dem Permanentmagnet (20) in der Axialrichtung des Rotorkerns (10) L3 größer als 0,5 mm ist.

3. Rotoranordnung (100) nach Anspruch 1 oder 2, ferner umfassend ein zweites Endvibrationsdämpfungselement (62), das auf einer zweiten Endoberfläche des Rotorkerns (10) angeordnet und mit dem Rotorkern (10) verbunden ist, wobei das zweite Endvibrationsdämpfungselement (62) direkt mit der Drehwelle (30) interagiert und wobei der Rotorkern (10) ferner in der Lage ist, die Drehwelle (30) über das zweite Endvibrationsdämpfungselement (62) und der Reihe nach über das erste Endvibrationsdämpfungselement (61) und das erste Übertragungselement (51) anzutreiben.

4. Rotoranordnung (100) nach Anspruch 3, wobei das erste Endvibrationsdämpfungselement (61) und das zweite Endvibrationsdämpfungselement (62) jeweils aus einem viskoelastischen Material hergestellt sind, wobei optional
das viskoelastische Material einen Verlustfaktor von größer als oder gleich 0,15 und eine Shore-Härte im Bereich von 20 Grad bis 80 Grad aufweist oder die Rotoranordnung ferner ein äußeres Verbindungsvibrationdämpfungselement umfasst, wobei der Rotorkern ein axiales Durchgangsloch aufweist, das sich zwischen benachbarten Magnetnuten befindet, wobei das äußere Verbindungsvibrationsdämpfungselement in dem axialen Durchgangsloch angeordnet ist und wobei das äußere Verbindungsvibrationsdämpfungselement ein mit dem ersten Endvibrationsdämpfungselement verbundenes erstes Ende und ein mit dem zweiten Endvibrationsdämpfungselement verbundenes zweites Ende aufweist.

5. Rotoranordnung (100) nach einem der Ansprüche 1 bis 3, ferner umfassend ein zweites Endvibrationsdämpfungselement (62), das auf einer zweiten Endoberfläche des Rotorkerns (10) angeordnet ist und mit dem Rotorkern (10) verbunden ist; und ein zweites Übertragungselement (52), das in dem zweiten Endvibrationsdämpfungselement (62) angeordnet ist, wobei das zweite Übertragungselement (52) mit der Drehwelle (3) interagiert und wobei der Rotorkern (10) ferner in der Lage ist, die Drehwelle (30) der Reihe nach über das zweite Endvibrationsdämpfungselement und das zweite Übertragungselement anzutreiben.

6. Rotoranordnung (100) nach Anspruch 5, wobei ein Teil des ersten Endvibrationsdämpfungselements (61) direkt mit der Drehwelle (30) interagiert und wobei ein Teil des zweiten Endvibrationsdämpfungselements (62) direkt mit der Drehwelle (30) interagiert oder wobei das erste Endvibrationsdämpfungselement (61) und das zweite Endvibrationsdämpfungselement (62) jeweils eine darauf definierte Öffnung aufweisen und wobei ein Teil des Rotorkerns (30) durch die Öffnung freigelegt ist oder wobei die Rotoranordnung (100) ferner ein äußeres Verbindungsvibrationsdämpfungselement (63) umfasst, wobei der Rotorkern (10) ein axiales Durchgangsloch (103) aufweist, das sich zwischen benachbarten Magnetnuten (102) befindet, wobei das äußere Verbindungsvibrationsdämpfungselement (63) in dem axialen Durchgangsloch (103) angeordnet ist und wobei das äußere Verbindungsvibrationsdämpfungselement (63) ein mit dem ersten Endvibrationsdämpfungselement (61) verbundenes erstes Ende und ein mit dem zweiten Endvibrationsdämpfungselement (62) verbundenes zweites Ende aufweist oder wobei eine Länge des Permanentmagneten (20) in einer Axialrichtung des Rotorkerns (10) größer als eine axiale Länge der Magnetnut (102) ist, wobei der Permanentmagnet (20) ein erstes Ende aufweist, das sich aus der mindestens einen Magnetnut (102) heraus erstreckt und in dem ersten Endvibrationsdämpfungselement (61) eingreift, und ein zweites Ende aufweist, das sich aus der mindestens einen Magnetnut (102) heraus erstreckt und in dem zweiten Endvibrationsdämpfungselement (62) eingreift.

7. Rotoranordnung (100) nach Anspruch 4 oder 6, ferner umfassend ein inneres Verbindungsvibrationsdämpfungselement (65), das in dem Spalt zwischen der Drehwelle (30) und dem Rotorkern (10) angeordnet ist, wobei das innere Verbindungsvibrationsdämpfungselement (65) ein mit dem ersten Endvibrationsdämpfungselement (61) verbundenes erstes Ende und ein mit dem zweiten Endvibrationsdämpfungselement (62) verbundenes zweites Ende aufweist.

8. Rotoranordnung (100) nach Anspruch 7, ferner umfassend ein mittleres Verbindungsvibrationsdämpfungselement (64), wobei zwischen einer inneren Oberfläche des Permanentmagneten (20) und einer inneren Bodenoberfläche der mindestens einen Magnetnut (102) ein Zwischenraum (105) definiert ist, wobei das mittlere Verbindungsvibrationsdämpfungselement (64) in dem Zwischenraum (105) angeordnet ist, wobei das mittlere Verbindungsvibrationsdämpfungselement (64) ein mit dem ersten Endvibrationsdämpfungselement (61) verbundenes erstes Ende und ein mit dem zweiten Endvibrationsdämpfungselement verbundenes zweites Ende aufweist.

9. Rotoranordnung nach Anspruch 8, wobei der Rotorkern (10) durch Laminieren einer Vielzahl von Rotorschichten in einer Axialrichtung des Rotorkerns (10) gebildet ist, wobei die Vielzahl von Rotorschichten mindestens eine ganz überbrückende Schicht (110) und mindestens eine halb überbrückende Schicht (120) umfasst, wobei der Rotorkern (10) einen ersten Endabschnitt, einen zweiten Endabschnitt und einen zwischen dem ersten Endabschnitt und dem zweiten Endabschnitt befindlichen mittleren Teilabschnitt aufweist, wobei der erste Endabschnitt und der zweite Endabschnitt jeweils durch Laminieren einer Vielzahl von ganz überbrückenden Schichten (110) gebildet sind und wobei der mittlere Teilabschnitt durch Laminieren einer Vielzahl von halb überbrückenden Schichten (120) gebildet ist.

10. Rotoranordnung (100) nach Anspruch 9, wobei eine von benachbarten halb überbrückenden Schichten (120) des in der Axialrichtung des Rotorkerns (10) mittleren Teilabschnitts in der Lage ist, mindestens einen Magnetpol relativ zu der anderen der benachbarten halb überbrückenden Schichten (120) in einer Umfangsrichtung des Rotorkerns zu drehen, oder wobei einige einer Vielzahl von inneren Magnetbrücken (113) der mindestens einen halb überbrückenden Schicht (120) darauf definierte Magnetbrückenlöcher (104) aufweisen, wobei die Magnetbrückenlöcher (104) durch die inneren Magnetbrücken (113) in der Umfangsrichtung des Rotorkerns (10) verlaufen, wobei innere Magnetbrücken (113) einer von benachbarten halb überbrückenden Schichten (120) in der Axialrichtung des Rotorkerns (10) Magnetbrückenlöcher (104) aufweisen und innere Magnetbrücken (113) der anderen der benachbarten halb überbrückenden Schichten (120) kein Magnetbrückenloch (104) aufweisen, wobei ein Umfangs-Verbindungsvibrationsdämpfungselement (66) in dem Magnetbrückenloch (104) angeordnet ist und wobei benachbarte mittlere Verbindungsvibrationsdämpfungselemente (64) durch das Umfangs-Verbindungsvibrationsdämpfungselement (66) miteinander verbunden sind.

11. Rotoranordnung (100) nach Anspruch 10, wobei das erste Endvibrationsdämpfungselement (61), das zweite Endvibrationsdämpfungselement (62), das innere Verbindungsvibrationsdämpfungselement (65), das äußere Verbindungsvibrationsdämpfungselement (63), das mittlere Verbindungsvibrationsdämpfungselement (64) und das Umfangs-Verbindungsvibrationsdämpfungselement (66) jeweils aus einem viskoelastischen Material hergestellt sind.

12. Rotoranordnung nach Anspruch 11, wobei das erste Endvibrationsdämpfungselement (61), das zweite Endvibrationsdämpfungselement (62), das innere Verbindungsvibrationsdämpfungselement (65), das äußere Verbindungsvibrationsdämpfungselement (63), das mittlere Verbindungsvibrationsdämpfungselement (64) und das Umfangs-Verbindungsvibrationsdämpfungselement (66) durch Spritzguss einstückig gebildet sind, wobei optional das viskoelastische Material einen Verlustfaktor größer als oder gleich 0,15 und eine Shore-Härte im Bereich von 20 Grad bis 80 Grad aufweist.

13. Rotoranordnung (100) nach Anspruch 1, wobei eine äußere Umfassungswand des ersten Übertragungselements (51) mindestens einen ersten radialen Übertragungsvorsprung (510) und mindestens eine erste radiale offene Übertragungsnut (511), die sich zwischen benachbarten ersten radialen Übertragungsvorsprüngen (510) befindet, aufweist, wobei das erste Endvibrationsdämpfungselement (61) ein erstes mittiges Loch (617) aufweist, wobei eine Umfassungswand des ersten mittigen Lochs (617) mindestens einen ersten radialen Vibrationsdämpfungsvorsprung (616) und mindestens eine erste radiale offene Vibrationsdämpfungsnut (615), die sich zwischen benachbarten ersten radialen Vibrationsdämpfungsvorsprüngen (616) befindet, aufweist, wobei der mindestens eine erste radiale Übertragungsvorsprung (510) in der mindestens einen ersten radialen offenen Vibrationsdämpfungsnut (615) eingreift und wobei der mindestens eine erste radiale Vibrationsdämpfungsvorsprung (616) in der mindestens einen ersten radialen offenen Übertragungsnut (511) eingreift.

14. Motor, umfassend die Rotoranordnung (100) nach einem der Ansprüche 1 bis 13.

## Revendications

1. Ensemble formant rotor (100), comportant un noyau de rotor (10) ayant au moins une rainure pour aimant (102) et un trou d'arbre de rotation (101) ; un aimant permanent (20) disposé dans ladite au moins une rainure pour aimant (102) ; un arbre de rotation (30) disposé dans le trou d'arbre de rotation (101), dans lequel un espace est défini entre l'arbre de rotation (30) et le noyau de rotor (10), et dans lequel l'arbre de rotation (30) a une première extrémité et une deuxième extrémité qui s'étendent hors du trou d'arbre de rotation (101) ; un premier élément d'amortissement de vibration d'extrémité (61) disposé sur une première surface d'extrémité du noyau de rotor (10) et connecté au noyau de rotor (10) ; et un premier élément de transmission (51) disposé à l'intérieur du premier élément d'amortissement de vibration d'extrémité (61), dans lequel le premier élément de transmission (51) interagit avec l'arbre de rotation (30), et dans lequel le noyau de rotor (10) est en mesure d'entraîner l'arbre de rotation (30) au moins de manière séquentielle par le premier élément d'amortissement de vibration d'extrémité (61) et par le premier élément de transmission (51), **caractérisé en ce qu'**une partie du premier élément d'amortissement de vibration d'extrémité (61) interagit directement avec l'arbre de rotation (30), et dans lequel le noyau de rotor (10) est par ailleurs en mesure d'entraîner l'arbre de rotation (30) par la partie du premier élément d'amortissement de vibration d'extrémité (61) et de manière séquentielle par le premier élément d'amortissement de vibration d'extrémité (61) et par le premier élément de transmission (51), éventuellement, dans lequel la partie du premier élément d'amortissement de vibration d'extrémité (61) a une épaisseur L dans une direction axiale de l'arbre de rotation, où L ≥ 0,5 mm.

2. Ensemble formant rotor (100) selon la revendication 1, dans lequel le premier élément de transmission (51) comporte un premier corps (513) et un premier bossage (514) faisant saillie en provenance du premier corps (513) vers la première surface d'extrémité du noyau de rotor (10), dans lequel l'arbre de rotation (30) passe au travers du premier corps (513) et du premier bossage (514), et une distance minimum entre le premier bossage (514) et la première surface d'extrémité du noyau de rotor (10) dans une direction axiale du noyau de rotor (10) est L1 qui est supérieure à 0,5 mm, éventuellement, dans lequel un espace minimum entre le premier bossage (514) et l'aimant permanent (20) dans une direction radiale du noyau de rotor (10) est L2 qui est supérieure à 0,5 mm, et dans lequel un espace minimum entre le premier corps (513) et l'aimant permanent (20) dans la direction axiale du noyau de rotor (10) est L3 qui est supérieure à 0,5 mm.

3. Ensemble formant rotor (100) selon les revendications 1 ou 2, comportant par ailleurs un deuxième élément d'amortissement de vibration d'extrémité (62) disposé sur une deuxième surface d'extrémité du noyau de rotor (10) et connecté au noyau de rotor (10), dans lequel le deuxième élément d'amortissement de vibration d'extrémité (62) interagit directement avec l'arbre de rotation (30), et dans lequel le noyau de rotor (10) est par ailleurs en mesure d'entraîner l'arbre de rotation (30) par le deuxième élément d'amortissement de vibration d'extrémité (62) et de manière séquentielle par le premier élément d'amortissement de vibration d'extrémité (61) et par le premier élément de transmission (51).

4. Ensemble formant rotor (100) selon la revendication 3, dans lequel chacun parmi le premier élément d'amortissement de vibration d'extrémité (61) et le deuxième élément d'amortissement de vibration d'extrémité (62) est réalisé à partir d'un matériau viscoélastique, éventuellement,
dans lequel le matériau viscoélastique a un facteur de perte supérieur ou égal à 0,15 et une dureté Shore allant de 20 degrés à 80 degrés, ou, l'ensemble formant rotor comporte par ailleurs un élément d'amortissement de vibration à connexion de type extérieur, dans lequel le noyau de rotor a un trou traversant axial situé entre des rainures pour aimant adjacentes, dans lequel l'élément d'amortissement de vibration à connexion de type extérieur est disposé à l'intérieur du trou traversant axial, et dans lequel l'élément d'amortissement de vibration à connexion de type extérieur a une première extrémité connectée au premier élément d'amortissement de vibration d'extrémité et une deuxième extrémité connectée au deuxième élément d'amortissement de vibration d'extrémité.

5. Ensemble formant rotor (100) selon l'une quelconque des revendications 1 à 3, comportant par ailleurs un deuxième élément d'amortissement de vibration d'extrémité (62) disposé sur une deuxième surface d'extrémité du noyau de rotor (10) et connecté au noyau de rotor (10) ; et un deuxième élément de transmission (52) disposé dans le deuxième élément d'amortissement de vibration d'extrémité (62), dans lequel le deuxième élément de transmission (52) interagit avec l'arbre de rotation (3), et dans lequel le noyau de rotor (10) est par ailleurs en mesure d'entraîner l'arbre de rotation (30) de manière séquentielle par le deuxième élément d'amortissement de vibration d'extrémité et par le deuxième élément de transmission.

6. Ensemble formant rotor (100) selon la revendication 5, dans lequel une partie du premier élément d'amortissement de vibration d'extrémité (61) interagit directement avec l'arbre de rotation (30), et dans lequel une partie du deuxième élément d'amortissement de vibration d'extrémité (62) interagit directement avec l'arbre de rotation (30), ou, dans lequel chacun parmi le premier élément d'amortissement de vibration d'extrémité (61) et le deuxième élément d'amortissement de vibration d'extrémité (62) a une ouverture définie sur celui-ci, et dans lequel une partie du noyau de rotor (30) est exposée au travers de l'ouverture, ou, dans lequel l'ensemble formant rotor (100) comporte par ailleurs un élément d'amortissement de vibration à connexion de type extérieur (63), dans lequel le noyau de rotor (10) a un trou traversant axial (103) situé entre des rainures pour aimant adjacentes (102), dans lequel l'élément d'amortissement de vibration à connexion de type extérieur (63) est disposé à l'intérieur du trou traversant axial (103), et dans lequel l'élément d'amortissement de vibration à connexion de type extérieur (63) a une première extrémité connectée au premier élément d'amortissement de vibration d'extrémité (61) et une deuxième extrémité connectée au deuxième élément d'amortissement de vibration d'extrémité (62), ou, dans lequel une longueur de l'aimant permanent (20) dans une direction axiale du noyau de rotor (10) est supérieure à une longueur axiale de la rainure pour aimant (102), dans lequel l'aimant permanent (20) a une première extrémité s'étendant hors de ladite au moins une rainure pour aimant (102) et mise en prise dans le premier élément d'amortissement de vibration d'extrémité (61) et une deuxième extrémité s'étendant hors de ladite au moins une rainure pour aimant (102) et mise en prise dans le deuxième élément d'amortissement de vibration d'extrémité (62).

7. Ensemble formant rotor (100) selon la revendication 4 ou la revendication 6, comportant par ailleurs un élément d'amortissement de vibration à connexion de type intérieur (65) disposé dans l'espace entre l'arbre de rotation (30) et le noyau de rotor (10), dans lequel l'élément d'amortissement de vibration à connexion de type intérieur (65) a une première extrémité connectée au premier élément d'amortissement de vibration d'extrémité (61) et une deuxième extrémité connectée au deuxième élément d'amortissement de vibration d'extrémité (62).

8. Ensemble formant rotor (100) selon la revendication 7, comportant par ailleurs un élément d'amortissement de vibration à connexion de type intermédiaire (64), dans lequel un interstice (105) est défini entre une surface intérieure de l'aimant permanent (20) et une surface inférieure intérieure de ladite au moins une rainure pour aimant (102), dans lequel l'élément d'amortissement de vibration à connexion de type intermédiaire (64) est disposé dans l'interstice (105), dans lequel l'élément d'amortissement de vibration à connexion de type intermédiaire (64) a une première extrémité connectée au premier élément d'amortissement de vibration d'extrémité (61) et une deuxième extrémité connectée au deuxième élément d'amortissement de vibration d'extrémité.

9. Ensemble formant rotor selon la revendication 8, dans lequel le noyau de rotor (10) est formé en stratifiant une pluralité de tôles de rotor dans une direction axiale du noyau de rotor (10), dans lequel la pluralité de tôles de rotor comporte au moins une tôle de plein pontage (110) et au moins une tôle de demi-pontage (120), dans lequel le noyau de rotor (10) a une première partie d'extrémité, une deuxième partie d'extrémité, et une section intermédiaire située entre la première partie d'extrémité et la deuxième partie d'extrémité, dans lequel chacune parmi la première partie d'extrémité et la deuxième partie d'extrémité est formée en stratifiant une pluralité de tôles de plein pontage (110), et dans lequel la section intermédiaire est formée en stratifiant une pluralité de tôles de demi-pontage (120).

10. Ensemble formant rotor (100) selon la revendication 9, dans lequel l'une des tôles de demi-pontage adjacentes (120) de la section intermédiaire dans la direction axiale du noyau de rotor (10) est en mesure de faire tourner au moins un pôle magnétique par rapport à l'autre des tôles de demi-pontage adjacentes (120) dans une direction circonférentielle du noyau de rotor, ou, dans lequel certains d'une pluralité de ponts magnétiques intérieurs (113) de ladite au moins une tôle de demi-pontage (120) ont des trous de pont magnétique (104) définis sur ceux-ci, dans lequel les trous de pont magnétique (104) traversent les ponts magnétiques intérieurs (113) dans la direction circonférentielle du noyau de rotor (10), dans lequel des ponts magnétiques intérieurs (113) de l'une des tôles de demi-pontage adjacentes (120) dans la direction axiale du noyau de rotor (10) ont des trous de pont magnétique (104), et les ponts magnétiques intérieurs (113) de l'autre desdites tôles de demi-pontage adjacentes (120) n'ont pas de trou de pont magnétique (104), dans lequel un élément d'amortissement de vibration à connexion de type circonférentiel (66) est disposé à l'intérieur du trou de pont magnétique (104), et dans lequel des éléments d'amortissement de vibration à connexion de type intermédiaire adjacents (64) sont connectés les uns par rapport aux autres par l'élément d'amortissement de vibration à connexion de type circonférentiel (66).

11. Ensemble formant rotor (100) selon la revendication 10, dans lequel chacun parmi le premier élément d'amortissement de vibration d'extrémité (61), le deuxième élément d'amortissement de vibration d'extrémité (62), l'élément d'amortissement de vibration à connexion de type intérieur (65), l'élément d'amortissement de vibration à connexion de type extérieur (63), l'élément d'amortissement de vibration à connexion de type intermédiaire (64), et l'élément d'amortissement de vibration à connexion de type circonférentiel (66) est réalisé à partir d'un matériau viscoélastique.

12. Ensemble formant rotor selon la revendication 11, dans lequel le premier élément d'amortissement de vibration d'extrémité (61), le deuxième élément d'amortissement de vibration d'extrémité (62), l'élément d'amortissement de vibration à connexion de type intérieur (65), l'élément d'amortissement de vibration à connexion de type extérieur (63), l'élément d'amortissement de vibration à connexion de type intermédiaire (64), et l'élément d'amortissement de vibration à connexion de type circonférentiel (66) sont formés d'une seule pièce par moulage par injection, éventuellement, dans lequel le matériau viscoélastique a un facteur de perte supérieur ou égal à 0,15 et une dureté Shore allant de 20 degrés à 80 degrés.

13. Ensemble formant rotor (100) selon la revendication 1, dans lequel une paroi périphérique extérieure du premier élément de transmission (51) a au moins une première partie saillante radiale de transmission (510) et au moins une première rainure ouverte radiale de transmission (511) située entre des premières parties saillantes radiales de transmission adjacentes (510), dans lequel le premier élément d'amortissement de vibration d'extrémité (61) a un premier trou central (617), dans lequel une paroi périphérique du premier trou central (617) a au moins une première partie saillante radiale d'amortissement de vibration (616) et au moins une première rainure ouverte radiale d'amortissement de vibration (615) située entre des premières parties saillantes radiales d'amortissement de vibration adjacentes (616), dans lequel ladite au moins une première partie saillante radiale de transmission (510) est mise en prise dans ladite au moins une première rainure ouverte radiale d'amortissement de vibration (615), et dans lequel ladite au moins une première partie saillante radiale d'amortissement de vibration (616) est mise en prise dans ladite au moins une première rainure ouverte radiale de transmission (511).

14. Moteur, comportant l'ensemble formant rotor (100) selon l'une quelconque des revendications 1 à 13.
